# EUROPÄISCHE PATENTSCHRIFT

(11) **EP 3 012 459 B1**
(45) Veröffentlichungstag und Bekanntmachung des Hinweises auf die Patenterteilung: **15.05.2019**
(21) Anmeldenummer: 15185629.1
(22) Anmeldetag: 17.09.2015
(51) Int. Cl.: F04D 19/04, F04D 29/056, F04D 29/059, F04D 29/66, F16C 35/07, F16C 25/08, F16C 27/00, F16C 27/06, F16C 35/077

(54) **VAKUUMPUMPE**
VACUUM PUMP
POMPE À VIDE

(30) Priorität: 24.10.2014 DE 102014115507
(43) Veröffentlichungstag der Anmeldung: 27.04.2016
(73) Patentinhaber: Pfeiffer Vacuum GmbH, 35614 Aßlar (DE)
(72) Erfinder: Gogol, Torsten, 35630 Ehringshausen (DE)
(74) Vertreter: Knefel, Cordula

(56) Entgegenhaltungen:
- EP-A1- 0 884 108
- EP-A1- 1 619 400
- DE-A1-102008 037 786
- GB-A- 2 415 019
- JP-A- H07 269 566
- JP-A- 2000 074 080
- US-A- 5 662 456

## Beschreibung

Die Erfindung betrifft eine Vakuumpumpe nach dem Oberbegriff des Anspruches 1.

Molekularpumpen, insbesondere Turbomolekularpumpen gehören zu den kinetischen Vakuumpumpen. Der Aufbau ist dem einer Turbine ähnlich. In einem Gehäuse rotiert ein mehrstufiger turbinenartiger Rotor mit beschaufelten Scheiben. Als Beschaufelung wird die Gesamtheit der Schaufeln einer Turbine oder eines Verdichters bezeichnet. Zwischen den Rotorscheiben sind ebenfalls beschaufelte Statorscheiben mit ähnlicher Geometrie spiegelverkehrt angeordnet.

Bei einer Lagerung der Rotoren mit zwei Kugellagern müssen wegen der Schmierstoffe beide Lager auf der Vorvakuumseite angeordnet werden. Dies bedeutet eine lediglich einseitige (fliegende) Lagerung des Rotors mit seiner großen Masse.

Die Pumpwirkung einer Anordnung aus Rotor und Statorschaufeln beruht auf der Impulsübertragung von den schnell rotierenden Schaufeln auf die zu pumpenden Gasmoleküle. Moleküle, die auf die Schaufeln treffen, werden dort adsorbiert und verlassen nach einer gewissen Zeit die Schaufel wieder. Dabei addiert sich die Schaufelgeschwindigkeit zur thermischen Molekülgeschwindigkeit. Damit die durch die Schaufel übertragene Geschwindigkeitskomponente nicht durch Stöße mit anderen Molekülen verloren geht, muss Molekularströmung in der Pumpe herrschen, das heißt, die mittlere freie Weglänge muss größer sein als der Schaufelabstand.

Zum Stand der Technik (EP 2 064 448 B1) gehört eine Vakuumpumpe mit einem Gehäuse, bei der eine Antriebswelle relativ zum Gehäuse mit einer Lageranordnung drehbar abgestützt ist. Die Vakuumpumpe weist einen Pumpenmechanismus mit einer Statorkomponente, die am Gehäuse montiert ist, auf und einer Rotorkomponente, die auf der Antriebswelle in axialer Nähe der Statorkomponente angeordnet ist. Die Lageranordnung weist gemäß diesem Stand der Technik ein Lager auf, das durch eine metallische, elastische Abstützung sowohl in radialer als auch axialer Richtung abgestützt wird, die innere und äußere ringförmige Teile aufweist.

Weiterhin gehört zum Stand der Technik (EP 2 126 356 B1) eine Hochdruckpumpe, insbesondere zur Förderung von Kraftstoff für eine Brennkraftmaschine.

Diese zum Stand der Technik gehörende Lagerunterstützung weist den Nachteil auf, dass die metallische, elastische Abstützung relativ aufwendig in der Herstellung ist, da diese flexible, längliche, bogenförmige Elemente aufweist, die im wesentlichen konzentrisch mit einem inneren und einem äußeren Ring ausgebildet sind.

Weiterhin gehört zum Stand der Technik (GB 2 415 019 A) eine Lagerunterstützung für ein Kugellager. Kugellagerungen für Rotoren von Vakuumpumpen haben den Nachteil, dass Kugellager mit Schmierstoffen geschmiert werden müssen. Dies bedeutet auf der Hochvakuumseite eine Verunreinigung des Hochvakuums.

Zum Stand der Technik (EP 1 619 400 A1) gehört darüber hinaus eine Lagerung für Kugellager einer Turbomolekularpumpe. Auch diese Lagerung weist zwei Kugellager auf, die, wie schon ausgeführt, wegen der zu verwendenden Schmierschmittel zumindest hochvakuumseitig problematisch sind.

Weiterhin gehört zum Stand der Technik (JP 2000 074080 A) eine Vakuumpumpe, bei der ein Elastomer zur schwingungsarmen Anordnung einer Lagerunterstützung eines Kugellagers vorgesehen ist. Auch diese zum Stand der Technik gehörende Vakuumpumpe weist den Nachteil auf, dass vorvakuumseitig wie hochvakuumseitig Kugellager vorgesehen sind.

Zum Stand der Technik (US 5662456 A) gehört eine Reibungsvakuumpumpe mit einem Gehäuse, einem Rotor und Rotorlager. Gemäß dieser Druckschrift ist eine Lagerunterstützung vorgesehen, die aus einer Mehrzahl, vorzugsweise drei Stäben besteht. Diese zum Stand der Technik gehörende Vakuumpumpe kann weiter verbessert werden.

Das der Erfindung zugrunde liegende technische Problem besteht darin, eine Vakuumpumpe mit einer Lagerunterstützung anzugeben, die zuverlässig radial auftretende Schwingungen eines Rotors aufnimmt und eine axiale Abstützung und Positionierung des Rotors gewährleistet, die darüber hinaus einfach aufgebaut ist und die flexibel hinsichtlich der Steifigkeit und auch flexibel bezüglich der Dämpfung des Rotors ist.

Dieses technische Problem wird durch eine Vakuumpumpe mit den Merkmalen gemäß Anspruch 1 gelöst.

Die erfindungsgemäße Vakuumpumpe mit einem Gehäuse, einer Antriebswelle, die wenigstens von einer Lageranordnung relativ zum Gehäuse drehbar abgestützt ist, und einem Pumpenmechanismus, der eine Statorkomponente, die am Gehäuse angeordnet ist und eine Rotorkomponente aufweist, die auf der Antriebswelle in axialer Nähe der Statorkomponente angeordnet ist, wobei die Lageranordnung wenigstens ein Lager und wenigstens eine Lagerunterstützung aufweist, wobei die Lagerunterstützung wenigstens drei Schwingstäbe aufweist, wobei die Welle hochvakuumseitig durch ein Permanentmagnetlager und vorvakuumseitig durch ein Wälzlager drehbar unterstützt wird, zeichnet sich dadurch aus, dass die Lageranordnung wenigstens ein Loslager aufweist und dass die wenigstens drei Schwingstäbe bei dem Loslager federnd gelagert ausgebildet sind und dass die wenigstens drei Schwingstäbe des Loslagers axial beweglich in einem Lagerschild oder axial beweglich in einer Lagerfassung oder axial beweglich in einem äußeren Lagerkäfig des Lagers angeordnet sind.

Durch diese erfindungsgemäße Ausgestaltung ist es möglich, radial auftretende Schwingungen des Rotors aufzunehmen. Die Schwingstäbe nehmen das Lager, beispielsweise einen äußeren Lagerkäfig eines Kugellagers oder eine das Lager aufnehmende Lagerfassung auf. Die Schwingstäbe sind als elastische, das heißt verformbare Elemente ausgebildet. Die Erfindung weist den Vorteil auf, dass durch wählbare Querschnitte, Längen, Art des Materials und Anzahl der Schwingstäbe die Steifigkeit und auch die Dämpfung des Rotors einstellbar sind. Das Lager, beispielsweise der äußere Lagerkäfig eines Kugellagers oder eine Lagerfassung, wird vorteilhaft fest an den elastischen Elementen, das heißt, an den Schwingstäben angeordnet.

Gemäß der Erfindung ist das wenigstens eine Loslager in axialer Richtung verschiebbar ausgebildet. Durch die Anordnung mit den wenigstens drei Schwingstäben, die gleitend in dem Lager, beispielsweise in dem äußeren Lagerkäfig oder der den äußeren Lagerkäfig aufnehmenden Lagerfassung angeordnet sind, wird die nötige Vorspannung auf das Lager ausgeübt.

Gemäß einer vorteilhaften Ausführungsform der Erfindung weist eine erste Lageranordnung wenigstens ein Festlager auf, wobei bei dem Festlager wenigstens drei Schwingstäbe fest am Gehäuse und fest an dem Lager angeordnet sind. Das Festlager ist in axialer Richtung der Welle fest in der Vakuumpumpe angeordnet. Die wenigstens drei Schwingstäbe gewährleisten, dass die radial auftretenden Schwingungen des Rotors aufgenommen werden können. Beispielsweise sind die wenigstens drei Schwingstäbe an einem äußeren Lagerkäfig eines Kugellagers angeordnet.

Gemäß einer weiteren vorteilhaften Ausführungsform der Erfindung weist eine zweite Lageranordnung wenigstens ein Loslager auf. Bei dem Loslager sind die wenigstens drei Schwingstäbe federnd gelagert ausgebildet. Das bedeutet, dass zwischen den wenigstens drei Schwingstäben und dem Loslager eine federnde Lagerung vorgesehen ist. Handelt es sich um Kugellager, sind die wenigstens drei Schwingstäbe vorteilhaft federnd in oder an dem äußeren Lagerkäfig öder der Lagerfassung angeordnet. Hierdurch ist es möglich, dass das Loslager axial beweglich ist. Vorteilhaft sind die wenigstens drei Schwingstäbe gleitend in oder an dem Lager, beispielsweise dem äußeren Lagerkäfig oder der Lagerfassung angeordnet. Zwischen dem festen Teil des Gehäuses, beispielsweise einem Lagerschild, in dem die wenigstens drei Schwingstäbe angeordnet sind, und dem in axialer Richtung beweglichen Teil des Lagers, beispielsweise dem äußeren Lagerkäfig oder der Lagerfassung, ist vorteilhaft eine Feder angeordnet für einen Längenausgleich, um bei Erwärmung des Rotors die nötige Vorspannung der Lager zu gewährleisten.

Gemäß einer vorteilhaften Ausführungsform sind die wenigstens drei Schwingstäbe in axialer Richtung federnd gelagert, das heißt, dass in axialer Richtung die nötige Vorspannung auf das Lager aufgebracht werden kann.

Gemäß einer weiteren vorteilhaften Ausführungsform sind die federgelagerten Schwingstäbe als auf das wenigstens eine Loslager eine Vorspannung in axialer Richtung ausübende Schwingstäbe ausgebildet.

Das Loslager zeichnet sich dadurch aus, dass durch eine federnde Lagerunterstützung eine Vorspannung auf das Loslager ausgeübt werden kann.

Gemäß einer bevorzugten Ausführungsform der Erfindung sind die Schwingstäbe in der Lagerfassung des Loslagers beweglich gelagert oder die Schwingstäbe sind in dem äußeren Lagerkäfig beweglich gelagert. Grundsätzlich ist es jedoch auch möglich, den äußeren Lagerkäfig in der Lagerfassung anzuordnen und die Lagerfassung nimmt die Schwingstäbe gleitend auf.

Gemäß einer weiteren vorteilhaften Ausführungsform der Erfindung ist an und/oder um jeden der wenigstens drei Schwingstäbe jeweils eine Feder zur Erzeugung der Vorspannung des Lagers angeordnet.

Die Vorspannung des Lagers wird vorteilhaft durch Federn erzeugt. Es ist ausreichend, dass Federn an zwei Schwingstäben vorgesehen sind. Wegen der Symmetrie sollten Federn an wenigstens zwei Schwingstäben angeordnet sein. Es besteht auch die Möglichkeit, dass an mehr als zwei Schwingstäben jeweils eine Feder angeordnet ist.

Gemäß einer anderen vorteilhaften Ausführungsform der Erfindung ist wenigstens eine die Welle umgreifende Feder oder wenigstens ein die Welle umgreifendes Bauteil aus einem elastomeren Material, zum Beispiel wenigstens ein O-Ring, zur Erzeugung einer Vorspannung des Lagers vorgesehen.

An Stelle der wenigstens zwei Federn, die im Bereich der Schwingstäbe angeordnet sind, ist es auch möglich, eine Feder vorzusehen, die die Welle umgreift und die eine Vorspannung des Lagers erzeugt.

Gemäß einer weiteren vorteilhaften Ausführungsform der Erfindung sind die wenigstens drei Schwingstäbe radialsymmetrisch um die Welle verteilt angeordnet.

Diese Ausführungsform hat den Vorteil, dass eine radialsymmetrische Lagerung der Welle vorgesehen ist.

Vorzugsweise sind die Schwingstäbe rotationssymmetrisch ausgebildet. Die Schwingstäbe können beispielsweise zylinderförmig ausgebildet sein. Diese Ausbildungsform weist den Vorteil auf, dass die Schwingstäbe besonders einfach herzustellen sind.

Es besteht jedoch auch die Möglichkeit, dass die Schwingstäbe asymmetrisch ausgebildet sind und dass die asymmetrischen Schwingstäbe zusammen im montierten Zustand eine radialsymmetrische Lagerunterstützung bilden.

Die asymmetrischen Schwingstäbe können beispielsweise wenigstens eine Einschnürung und/oder wenigstens eine Vorwölbung aufweisen. Es besteht auch die Möglichkeit, die Schwingstäbe auf einer Seite mit einer Einschnürung und auf der gegenüberliegenden Seite mit einer Vorwölbung auszugestalten. Hierdurch kann die Steifigkeit und damit die Dämpfung der Lagerung des Rotors eingestellt werden.

Die Schwingstäbe bestehen vorteilhaft aus Metall und/oder Kunststoff.

Als Metall kann beispielsweise Federstahl, Aluminium, Kupfer oder Messing verwendet werden. Als Kunststoff kann vorteilhaft TORLON (eingetragene Marke der SOLVAY Société Anonyme, 1120 Brüssel, Belgien (Firmenname)) verwendet werden.

Es besteht auch die Möglichkeit, als Kunststoff Polyetheretherketon (PEEK) zu verwenden.

Das Material der Schwingstäbe wird so gewählt, dass bei Wärme keine oder eine möglichst geringe Längenausdehnung auftritt. In den Lagern herrschen beispielsweise Temperaturen von bis zu 60 Grad Celsius, so dass auf jeden Fall bis zu diesem Temperaturbereich die Längenausdehnung vernachlässigbar sein muss.

Die Stäbe müssen andererseits aus einem Material bestehen, derart, dass sie sich dauerhaft im elastischen Bereich befinden oder sich hauptsächlich im elastischen Bereich befinden und sich nicht plastisch verformen.

Die Schwingstäbe haben bei der Anordnung in einem Festlager vorteilhaft kein Spiel in der Lagerfassung oder in dem Lagerkäfig. Vorteilhaft sind die Schwingstäbe jedoch demontierbar. Die Stäbe in dem Festlager dienen dazu, die Welle genau zu zentrieren.

In dem Gehäuse, beispielsweise in dem Lagerschild, werden die Stäbe vorteilhaft eingeschrumpft oder eingeklebt.

Gemäß einer vorteilhaften Ausführungsform der Erfindung sind die Schwingstäbe in der Lagerfassung mittels einer Schraube mit einem Exzenter fixierbar ausgebildet. Diese Ausführungsform hat den Vorteil, dass die Welle genau zentriert werden kann, indem die Stäbe mittels des Exzenters in entsprechender Position in der Lagerfassung oder in dem Lagerkäfig angeordnet werden.

Bei einer unlösbaren Verbindung können die Stäbe beispielsweise aufgepresst werden. Bei einer Demontage des Lagers sind die Stäbe dann zu ersetzen.

Wie schon ausgeführt, sind gemäß einer vorteilhaften Ausführungsform die Schwingstäbe in dem Gehäuse und/oder der Lagerfassung und/oder dem Lagerkäfig eingeschrumpft oder eingeklebt ausgebildet. Dies ist eine besonders einfache Art der Befestigung.

Die Lagerfassung darf um einen bestimmten Betrag schwingen. Hierzu ist ein bestimmter Abschnitt zwischen der Lagerfassung und dem Gehäuse vorgesehen. Die Lagerfassung hat hier im Prinzip die Eigenschaft eines Notlagers. Wird der Radialspalt überschritten, der beispielsweise 0,2 bis 0,5 Millimeter beträgt, stößt die Lagerfassung an das Gehäuse und das Lager kann sich nicht weiter aufschwingen.

Ein weiterer Vorteil der Erfindung besteht darin, dass über die Geometrie und Materialeigenschaften die Eigenfrequenzen der Lagerung angepasst werden können, um Resonanzen im Betrieb zu verhindern.

Die Steifigkeit der Schwingstäbe ist vorteilhaft so ausgelegt, dass kein Anschlag erfolgt.

Die erfindungsgemäße Lagerung kann grundsätzlich bei allen Arten von Vakuumpumpen eingesetzt werden. Besonders vorteilhaft wird sie bei Molekularpumpen oder Turbomolekularpumpen eingesetzt.

Weitere Merkmale und Vorteile der Erfindung ergeben sich anhand der zugehörigen Zeichnungen, in der mehrere Ausführungsbeispiele einer erfindungsgemäßen Lagerung nur beispielhaft dargestellt sind. In der Zeichnung zeigen:
- Fig. 1: eine Turbomolekularpumpe im Längsschnitt;
- Fig. 2: einen Querschnitt durch ein Festlager;
- Fig. 3: einen Querschnitt durch ein Loslager;
- Fig. 4: einen Querschnitt durch ein geändertes Ausführungsbeispiel eines Loslagers;
- Fig. 5: einen Schwingstab im Längsschnitt;
- Fig. 6: einen Schwingstab im Längsschnitt;
- Fig. 7: einen Schwingstab im Längsschnitt.

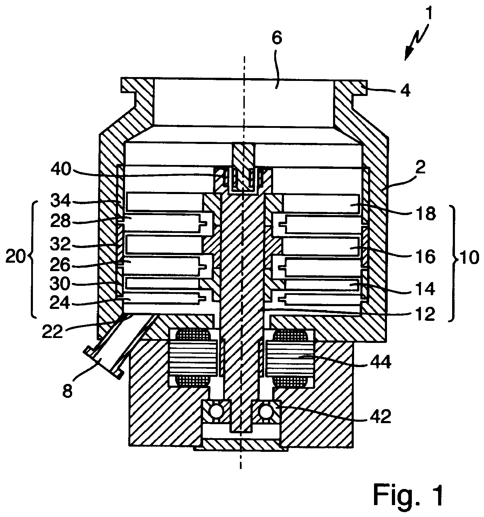

Fig. 1 zeigt eine Turbomolekularpumpe 1 mit einem Flansch 4, der lösbar an einem Flansch einer zu evakuierenden Kammer (nicht dargestellt) befestigt ist. Durch eine Ansaugöffnung 6 wird Gas in die Pumpe 1 eingesaugt und durch einen Auslass 8 ausgestoßen. In einem Gehäuse 2 sind Rotor 10 und Stator 20 angeordnet, durch deren Zusammenwirken die Förderwirkung erreicht wird.

Der Rotor 10 umfasst eine Welle 12, auf der eine vorvakuumseitige Rotorscheibe 14, eine mittlere Rotorscheibe 16 und eine hochvakuumseitige Rotorscheibe 18 vorgesehen sind, wobei jede der Rotorscheiben 14, 16, 18 einen aus einer Mehrzahl von Schaufeln bestehenden Schaufelkranz besitzt. Die Welle 12 wird hochvakuumseitig durch ein Permanentmagnetlager 40 und vorvakuumseitig durch ein Wälzlager 42 drehbar unterstützt. Ein Antrieb 44 setzt den Rotor 10 in schnelle Drehung von einigen 10.000 Umdrehungen pro Minute.

Der Stator 20 umfasst eine vorvakuumseitige Statorscheibe 24, eine mittlere Statorscheibe 26 und eine hochvakuumseitige Statorscheibe 28. Diese sind durch Distanzringe 30, 32 und 34 in Bezug auf die Welle 12 axial voneinander beabstandet und mit den Rotorscheiben 14, 16, 18 alternierend angeordnet. Die Statorscheiben 24, 26, 28 besitzen ebenfalls Schaufelkränze.

Die Anzahl von Rotor- und Statorscheiben hängt von den gewünschten vakuumtechnischen Parametern wie Saugvermögen und Druckverhältnisse zwischen Ansaugöffnung 6 und Auslass 8 ab. Der Rotor 10 kann an Stelle von Scheiben auch in im Stand der Technik bekannter Glockenbauweise gebaut sein und/oder zusätzlich eine Hohlweckstufe und/oder eine Siegbahn-Pumpstufe aufweisen. Zudem können beide Lager 40, 42 vorvakuumseitig angeordnet sein. Darüber hinaus ist es möglich, dass an Stelle des Permanentmagnetlagers 40 ein Wälzlager, insbesondere ein Kugellager, vorgesehen ist.

Der Auslass 8, der vorvakuumseitig angeordnet ist, ist in axialer Richtung gesehen in Richtung Vorvakuumseite nach der letzten Statorscheibe angeordnet. Darüber hinaus ist der Auslass mit einer Öffnung 22 in Richtung der Statorscheibe 24 angeordnet.

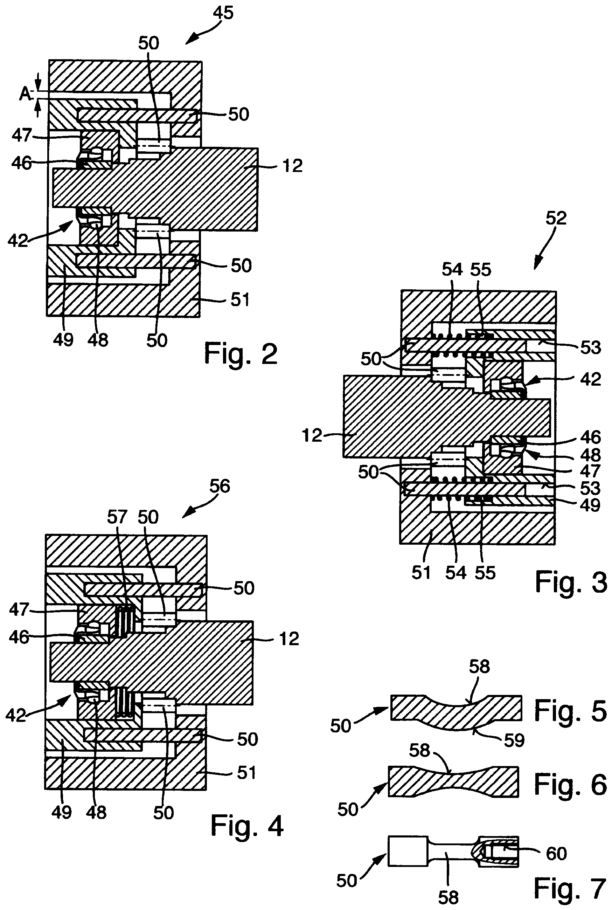

Das Wälzlager 42 ist in Fig. 1 lediglich schematisch eingezeichnet. Eine erfindungsgemäße Anordnung ist in Fig. 2 dargestellt.

Fig. 2 zeigt eine Lageranordnung 45 eines Festlagers. Die Welle 12 wird durch das Wälzlager 42 drehbar unterstützt. Das Lager 42 weist einen inneren Lagerkäfig 46 und einen äußeren Lagerkäfig 47 auf. Zwischen dem inneren Lagerkäfig 46 und dem äußeren Lagerkäfig 47 sind Wälzelemente in Form von Kugeln 48 angeordnet. Der äußere Lagerkäfig 47 ist in einer Lagerfassung 49 angeordnet. Die Lagerfassung 49 ist über Schwingstäbe 50 an einem Lagerschild 51 gelagert. Die Schwingstäbe 50 gewährleisten, dass radial auftretende Schwingungen des Rotors 12 aufgenommen werden. Die Schwingstäbe 50 sind radialsymmetrisch um den Rotor 12 verteilt angeordnet. Bei der Ausführung des Festlagers gemäß Fig. 2 sind die Schwingstäbe 50 fest in der Lagerfassung 49 und fest in dem Lagerschild 51 angeordnet.

Die Schwingstäbe 50 haben damit kein Spiel in der Lagerfassung 49 und in dem Schild 51. Sie sind vorteilhaft jedoch demontierbar. Die Schwingstäbe 50 dienen dazu, die Welle 12 genau zu zentrieren. Die Schwingstäbe können in der Lagerfassung 49 und in dem Schild 51 beispielsweise eingeschrumpft oder eingeklebt sein.

Die Schwingstäbe können auch aufgepresst werden. Die Lagerfassung 49 kann aufgrund der Elastizität der Schwingstäbe 50 um einen bestimmten Betrag schwingen. Hierzu ist ein Abstand A zwischen der Lagerfassung 49 und dem Lagerschild 51 vorgesehen. Die Lagerfassung 49 hat hier im Prinzip die Eigenschaft eines Notlagers. Wird der Radialspalt A überschritten, stößt die Lagerfassung 49 an das Lagerschild 51 des Gehäuses und das Lager kann sich nicht weiter aufschwingen. Die Steifigkeit der Schwingstäbe 50 ist derart ausgelegt, dass im Normalbetrieb kein Anschlag erfolgt.

Die Schwingstäbe 50 sind aus einem Material gebildet, derart, dass sie sich dauerhaft im elastischen Bereich befinden oder sich hauptsächlich im elastischen Bereich befinden und sich nicht plastisch verformen.

Fig. 3 zeigt eine Lageranordnung 52, die ein Loslager darstellt. Die Welle 12 ist wiederum durch ein Wälzlager 42, welches einen inneren Lagerkäfig 46 und einen äußeren Lagerkäfig 47 sowie Wälzelemente 48 aufweist, in dem Lagerschild 51 drehbar gelagert. Der äußere Lagerkäfig 47 ist in einer Lagerfassung 49 befestigt. Die Lagerfassung 49 weist Bohrungen 53 auf, in denen die Schwingstäbe 50 eintauchen. Die Schwingstäbe 50 sind fest in dem Lagerschild 51 angeordnet. Um die für das Lager 42 erforderliche Vorspannung zu erzeugen, sind die Schwingstäbe mittels Federn 54 beweglich in der Lagerfassung 49 gelagert. Die Federn 54 sorgen für den Längenausgleich, um bei Erwärmung des Rotors 12 die nötige Vorspannung des Lagers 42 zu gewährleisten.

Die Federn 54 sind in der Aufnahme 55 der Lagerfassung 49 gelagert.

Fig. 4 zeigt eine Lageranordnung 56 für eine weitere Ausführungsform eines Loslagers. Die Welle 12 ist mittels des Wälzlagers 42, welches einen inneren Lagerkäfig 46, einen äußeren Lagerkäfig 47 und Wälzelemente 48 aufweist, drehbar in dem Lagerschild 51 gelagert. Der äußere Lagerkäfig 47 ist fest in einer Lagerfassung 49 angeordnet. Zur federnden Lagerung der Lagerfassung 49 sind Schwingstäbe 50 vorgesehen, die fest in dem Lagerschild 51 angeordnet sind und die fest in der Lagerfassung 49 angeordnet sind. Um die erforderliche Vorspannung auf das Lager 42 zu erzeugen, ist eine Feder 57 vorgesehen, die die Welle 12 umgreift. Die Feder 57 stützt sich zum einen an der Lagerfassung 49 ab und greift kraftschlüssig an dem äußeren Lagerkäfig 47 an.

In den Fig. 2 bis 4 sind die Schwingstäbe 50 als rotationssymmetrische, im vorliegenden Fall als zylindrische Körper ausgestaltet.

Wie in Fig. 5 dargestellt, können die Schwingstäbe 50 jedoch auch andere Querschnitte aufweisen. Der Schwingstab 50 gemäß Fig. 5 weist eine Einschnürung 58 sowie eine Vorwölbung 59 auf.

Sind die Schwingstäbe 50 wie in Fig. 5 asymmetrisch ausgebildet, ist es erforderlich, dass die Anordnung mit den Schwingstäben 50 insgesamt ein rotationssymmetrisches Gebilde ergibt. Das bedeutet, dass beispielsweise die Vorwölbungen 59 sämtlicher Schwingstäbe bei Anordnung in der Lageranordnung 45, 52, 56 in Richtung der Welle 12 ausgerichtet sind.

Der Schwingstab 50 gemäß Fig. 6 weist eine rotationssymmetrische Einschnürung 58 auf.

Der Schwingstab 50 gemäß Fig. 7 weist ebenfalls eine rotationssymmetrische Einschnürung 58 auf. Der Schwingstab 50 weist darüber hinaus eine Gewindebohrung 60 auf, in der eine Schraube, vorzugsweise eine Exzenterschraube (nicht dargestellt), angeordnet werden kann. Über die Exzenterschraube kann die Ausrichtung des Schwingstabes 50 verändert werden, so dass der Rotor 12 zentriert werden kann.

### Bezugszahlen

- 1: Turbomolekularpumpe
- 2: Gehäuse
- 4: Flansch
- 6: Ansaugöffnung
- 8: Auslass
- 10: Rotor
- 12: Welle
- 14: Rotorscheibe
- 16: Rotorscheibe
- 18: Rotorscheibe
- 20: Stator
- 22: Öffnung
- 24: Statorscheibe
- 26: Statorscheibe
- 28: Statorscheibe
- 30: Distanzringe
- 32: Distanzringe
- 34: Distanzringe
- 40: Permanentmagnetlager
- 42: Wälzlager
- 44: Antrieb
- 45: Lageranordnung Festlager
- 46: innerer Lagerkäfig
- 47: äußerer Lagerkäfig
- 48: Wälzelemente
- 49: Lagerfassung
- 50: Schwingstäbe
- 51: Lagerschild
- 52: Lageranordnung Loslager
- 53: Bohrung
- 54: Federn
- 55: Aufnahmen
- 56: Lageranordnung Loslager
- 57: Feder
- 58: Einschnürung
- 59: Vorwölbung
- 60: Gewindebohrung

- A: Abstand

## Patentansprüche

1. Vakuumpumpe (1) mit einem Gehäuse (2), einer Antriebswelle (12), die von wenigstens einer Lageranordnung (40, 42) relativ zum Gehäuse (2, 51) drehbar abgestützt ist, und einem Pumpenmechanismus, der eine Statorkomponente (24, 26, 28), die am Gehäuse (2, 51) angeordnet ist, und eine Rotorkomponente (14, 16, 18) aufweist, die auf der Antriebswelle (12) in axialer Nähe der Statorkomponente (24, 26, 28) angeordnet ist, wobei die Lageranordnung (45, 52, 56) wenigstens ein Lager und wenigstens eine Lagerunterstützung aufweist, wobei die Lagerunterstützung wenigstens drei Schwingstäbe (50) aufweist, wobei die Welle (12) hochvakuumseitig durch ein Permanentmagnetlager (40) und vorvakuumseitig durch ein Wälzlager (42) drehbar unterstützt wird,
**dadurch gekennzeichnet, dass** die Lageranordnung (52, 56) wenigstens ein Loslager (52) aufweist, und dass die wenigstens drei Schwingstäbe (50) bei dem Loslager (52) federnd gelagert ausgebildet sind und dass die wenigstens drei Schwingstäbe (50) des Loslagers (52) axial beweglich in einem Lagerschild (5) oder axial beweglich in einer Lagerfassung (49) oder axial beweglich in einem äußeren Lagerkäfig (47) des Lagers (52) angeordnet sind.

2. Vakuumpumpe nach Anspruch 1, **dadurch gekennzeichnet, dass** die Lageranordnung (45) wenigstens ein Festlager aufweist, und dass die wenigstens drei Schwingstäbe (50) fest am Gehäuse (51) und fest an dem Lager (42) ange-ordnet sind.

3. Vakuumpumpe nach Anspruch 1, **dadurch gekennzeichnet, dass** die wenigstens drei Schwingstäbe (50) in axialer Richtung federnd gelagert sind.

4. Vakuumpumpe nach einem der Ansprüche 1 bis 3, **dadurch gekennzeichnet, dass** die federgelagerten Schwingstäbe (50) als auf das wenigstens eine Loslager eine Vorspannung in axialer Richtung ausübende Schwingstäbe (50) ausgebildet sind.

5. Vakuumpumpe nach Anspruch 4, **dadurch gekennzeichnet, dass** an oder um die wenigstens drei Schwingstäbe (50) jeweils eine Feder (54) zur Erzeugung der Vorspannung des Lagers angeordnet ist.

6. Vakuumpumpe nach Anspruch 1, **dadurch gekennzeichnet, dass** wenigstens eine die Welle (12) umgreifende Feder (57) oder wenigstens ein aus einem elastomeren Material gebildetes Bauteil zur Erzeugung einer Vorspannung des Lagers vorgesehen ist.

7. Vakuumpumpe nach einem der vorhergehenden Ansprüche, **dadurch gekennzeichnet, dass** die wenigstens drei Schwingstäbe (50) radialsymmetrisch um die Welle (12) verteilt angeordnet sind.

8. Vakuumpumpe nach einem der vorhergehenden Ansprüche, **dadurch gekennzeichnet, dass** die Schwingstäbe (50) rotationssymmetrisch ausgebildet sind.

9. Vakuumpumpe nach einem der Ansprüche 1 bis 7, **dadurch gekennzeichnet, dass** die Schwingstäbe (50) asymmetrisch ausgebildet sind, und dass die asymmetrischen Schwingstäbe (50) zusammen in montiertem Zustand eine radialsymmetrische Lagerunterstützung bilden.

10. Vakuumpumpe nach einem der vorhergehenden Ansprüche, **dadurch gekennzeichnet, dass** die Schwingstäbe (50) zylindrisch oder mit wenigstens einer Einschnürung (58) und/oder mit wenigstens einer Vorwölbung (59) ausgebildet sind.

11. Vakuumpumpe nach einem der vorhergehenden Ansprüche, **dadurch gekennzeichnet, dass** die Schwingstäbe (50) aus Metall und/oder Kunststoff gebildet sind.

12. Vakuumpumpe nach einem der vorhergehenden Ansprüche, **dadurch gekennzeichnet, dass** die Schwingstäbe (50) in der Lagerfassung (49) und/oder dem Lagerkäfig (47) mittels einer Schraube mit einem Exzenter fixierbar und ausrichtbar ausgebildet sind.

13. Vakuumpumpe nach einem der vorhergehenden Ansprüche, **dadurch gekennzeichnet, dass** die Schwingstäbe (50) in dem Gehäuse (51) und/oder in der Lagerfassung (49) und/oder in dem Lagerkäfig (47) eingeschrumpft und/oder eingeklebt und/oder eingepresst ausgebildet sind.

## Claims

1. A vacuum pump (1) with a housing (2), a drive shaft (12), which is rotatably supported relative to the housing (2, 51) by at least one bearing arrangement (40, 42), and a pump mechanism, which comprises a stator component (24, 26, 28), which is arranged on the housing (2, 51), and a rotor component (14, 16, 18), which is arranged on the drive shaft (12) axially close to the stator component (24, 26, 28), wherein the bearing arrangement (45, 52, 56) comprises at least one bearing and at least one bearing support, wherein the bearing support comprises at least three vibrating rods (50) wherein the shaft (12) is rotatably supported at the high vacuum side by a permanent magnetic bearing (40) and at the fore-vacuum side by a roller bearing (42).
**characterised in that** the bearing arrangement (52, 56) comprises at least one floating bearing (52), and **in that** the at least three vibrating rods (50) at the floating bearing (52) are formed to be resiliently mounted and **in that** the at least three vibrating rods (50) of the floating bearing (52) are arranged to be axially movable in a bearing plate (5) or axially movable in a bearing mounting (49) or axially movable in an outer bearing cage (47) of the bearing (52).

2. A vacuum pump according to claim 1, **characterised in that** the bearing arrangement (45) comprises at least one fixed bearing, and **in that** the at least three vibrating rods (50) are arranged fixedly to the housing (51) and fixedly to the bearing (42).

3. A vacuum pump according to claim 1, **characterised in that** the at least three vibrating rods (50) are mounted resiliently in the axial direction.

4. A vacuum pump according to any of claims 1 to 3, **characterised in that** the resiliently mounted vibrating rods (50) are formed as vibrating rods (50) exerting a biasing force on the at least one floating bearing.

5. A vacuum pump according to claim 4, **characterised in that** a respective spring (54) is arranged on or around the at least three vibrating rods (50) to generate the biasing force of the bearing.

6. A vacuum pump according to claim 1, **characterised in that**, to generate a biasing force of the bearing, there is provided at least one spring (57) surrounding the shaft (12) or at least one component formed of an elastomeric material.

7. A vacuum pump according to any one of the previous claims, **characterised in that** the at least three vibrating rods (50) are distributed radially symmetrically around the shaft (12).

8. A vacuum pump according to any one of the preceding claims, **characterised in that** that vibrating rods (50) are formed to be rotationally symmetric.

9. A vacuum pump according to any one of claims 1 to 7, **characterised in that** the vibrating rods (50) are arranged asymmetrically, and **in that** the asymmetric vibrating rods (50) together form a radially symmetric bearing support when assembled.

10. A vacuum pump according to any one of the preceding claims, **characterised in that** the vibrating rods (50) are arranged to be cylindrical or are formed with at least one constriction (58) and/or are formed with at least one protrusion (59).

11. A vacuum pump according to any one of the preceding claims, **characterised in that** the vibrating rods (50) are made of metal and/or plastics.

12. A vacuum pump according to any one of the preceding claims, **characterised in that** the vibrating rods (50) are configured to be fixable and orientable in the bearing mounting (49) and/or the bearing cage (47) by means of a screw with a cam.

13. A vacuum pump according to any one of the preceding claims, **characterised in that** vibrating rods (50) are configured to be shrunk and/or adhered and/or pressed in the housing (51) and/or in the bearing mounting (49) and/or in the bearing cage (47).

## Revendications

1. Pompe à vide (1) avec un boîtier (2), un arbre d'entraînement (12), qui est supporté en rotation par rapport au corps (2, 51) au moyen d'au moins un agencement de paliers (40, 42), et un mécanisme de pompe, qui présente un composant de stator (24, 26, 28), qui est disposé sur le boîtier (2, 51), et un composant de rotor (14, 16, 18), qui est disposé sur l'arbre d'entraînement (12) à proximité axiale du composant de stator (24, 26, 28), dans laquelle l'agencement de paliers (45, 52, 56) présente au moins un palier et au moins un support de palier, dans laquelle le support de palier présente au moins trois barres oscillantes (50), dans laquelle l'arbre (12) est supporté en rotation du côté du vide élevé par un palier à aimant permanent (40) et du côté du vide préliminaire par un palier à roulement (42), **caractérisé en ce que** l'agencement de paliers (52, 56) présente au moins un palier fou (52), et **en ce que** lesdites au moins trois barres oscillantes (50) sont supportées élastiquement dans le palier fou (52) et **en ce que** lesdites au moins trois barres oscillantes (50) du palier libre (52) sont disposées de façon mobile axialement dans un bouclier de palier (5) ou mobile axialement dans une monture de palier (49) ou mobile axialement dans une cage de palier extérieure (47) du palier (52).

2. Pompe à vide selon la revendication 1, **caractérisée en ce que** l'agencement de paliers (45) présente au moins un palier fixe et **en ce que** lesdites au moins trois barres oscillantes (50) sont attachées de façon fixe au boîtier (51) et de façon fixe au palier (42).

3. Pompe à vide selon la revendication 1, **caractérisé en ce que** lesdites au moins trois barres oscillantes (50) sont supportées élastiquement en direction axiale.

4. Pompe à vide selon l'une quelconque des revendications 1 à 3, **caractérisée en ce que** les barres oscillantes supportées élastiquement (50) sont réalisées sous forme de barres oscillantes (50) exerçant une précontrainte en direction axiale sur ledit au moins un palier libre.

5. Pompe à vide selon la revendication 4, **caractérisée en ce qu'**un ressort (54) destiné à produire la précontrainte du palier est disposé respectivement sur ou autour desdites au moins trois barres oscillantes (50).

6. Pompe à vide selon la revendication 1, **caractérisée en ce qu'**il est prévu au moins un ressort (57) entourant l'arbre (12) ou au moins un composant formé en un matériau élastomère pour produire une précontrainte du palier.

7. Pompe à vide selon l'une quelconque des revendications précédentes, **caractérisée en ce que** lesdites au moins trois barres oscillantes (50) sont disposées en symétrie radiale autour de l'arbre (12).

8. Pompe à vide selon l'une quelconque des revendications précédentes, **caractérisée en ce que** les barres oscillantes (50) sont réalisées avec une symétrie de révolution.

9. Pompe à vide selon l'une quelconque des revendications 1 à 7, **caractérisée en ce que** les barres oscillantes (50) sont de forme asymétrique, et **en ce que** les barres oscillantes asymétriques (50) forment ensemble à l'état monté un support de palier à symétrie radiale.

10. Pompe à vide selon l'une quelconque des revendications précédentes, **caractérisée en ce que** les barres oscillantes (50) sont réalisées sous forme cylindrique ou avec au moins un rétrécissement (58) et/ou avec au moins un renflement (59).

11. Pompe à vide selon l'une quelconque des revendications précédentes, **caractérisée en ce que** les barres oscillantes (50) sont formées en métal et/ou en matière plastique.

12. Pompe à vide selon l'une quelconque des revendications précédentes, **caractérisée en ce que** les barres oscillantes (50) peuvent être fixées et orientées dans la monture de palier (49) et/ou la cage de palier (47) au moyen d'une vis avec un excentrique.

13. Pompe à vide selon l'une quelconque des revendications précédentes, **caractérisée en ce que** les barres oscillantes (50) sont serties et/ou collées et/ou posées par pressage dans le corps (51) et/ou dans la monture de palier (49) et/ou dans la cage de palier (47) .
